# EUROPEAN PATENT APPLICATION

(11) **EP 4 472 061 A1**
(43) Date of publication of application: **04.12.2024**
(21) Application number: 22922556.0
(22) Date of filing: 28.10.2022
(51) Int. Cl.: H02P 25/064

(54) **CONVEYING DEVICE AND CONVEYING METHOD**

(30) Priority: 26.01.2022 JP 2022010414
(71) Applicant: HITACHI HIGH-TECH CORPORATION, Tokyo 105-6409 (JP)
(72) Inventor: MATSUDA, Yuki, Tokyo 105-6409 (JP); TAMAKOSHI, Takeshi, Tokyo 105-6409 (JP); MATSUKA, Takeshi, Tokyo 105-6409 (JP)
(74) Representative: Strehl Schübel-Hopf & Partner
(86) International application number: PCT/JP2022/040475
(87) International publication number: WO 2023/145174

(57) **Abstract**

Provided are a conveying device and a conveying method capable of detecting a speed of a conveyed object more accurately than that in the related art. The conveying device includes a coil 107 that includes a core 105 and a winding 106, a current detection unit 109 that detects a current flowing through the winding 106 of the coil 107, a drive unit 108 that supplies a voltage to the coil 107, and a control unit 110. The control unit 110 estimates a conveying speed of a holder 102 provided with a magnetic body 103 based on the current flowing through one winding 106 due to an influence of electromagnetic induction.

## Description

### Technical Field

The present invention relates to a conveying device and a conveying method.

### Background Art

As an example of a conveying device that detects an abnormality of a conveying device caused by a change in a surface state of a conveyance plane of the conveying device and maintains high conveyance performance, PTL 1 discloses a conveying device including a conveyance plane on which a conveyance container including a magnetic body is conveyed, a position detection unit that detects a position of the conveyance container on the conveyance plane, a magnetic pole that is disposed below the conveyance plane and includes a core and a coil, a drive unit that applies a voltage to the magnetic pole, and a calculation unit that controls the drive unit. The calculation unit calculates a conveying speed of the conveyance container based on the position of the conveyance container on the conveyance plane and a time at which the conveyance container passes through the position, and detects a surface state of the conveyance plane based on the calculated conveying speed of the conveyance container.

### Citation List

### Patent Literature

PTL 1: JP2021-010254A

### Summary of Invention

### Technical Problem

In a specimen analysis system for clinical tests, tests of designated analysis items are executed on specimens (samples) such as blood, plasma, serum, urine, and other body fluids.

In the specimen analysis system, devices having a plurality of functions are connected to each other to automatically execute processing of each step. That is, in order to streamline work of a laboratory, an analysis unit (analysis step) that executes a plurality types of analyses such as biochemistry and immunity, a preprocessing unit (preprocessing step) that executes a plurality of preprocessing steps necessary for the analysis, and the like are connected by a conveyance line and used as one specimen analysis system.

In recent years, there has been an increasing demand for importance and quickness of specimen analysis due to a situation such as sophistication of medical care and aging of patients. In order to improve analysis processing capability of the specimen analysis system, there is a demand for high-speed conveyance, mass conveyance, simultaneous conveyance, and conveyance in a plurality of directions for specimens.

As one of such methods for conveying a specimen, there is an electromagnetic conveyance system using an electromagnetic actuator.

In order to perform stable conveyance in the electromagnetic conveyance system, conveyance at a predetermined speed is required. Therefore, a function of estimating a speed of a conveyed object is essential.

As an example of a method for estimating a speed of a conveyed object in a conveying device using such an electromagnetic actuator, there is a technique disclosed in PTL 1.

In PTL 1, a conveying speed is obtained based on two detected positions, and time points at which an object passes through the positions. However, in the technique disclosed in PTL 1, it is necessary to detect a plurality of positions in calculation of the conveying speed, accuracy of the position detection may influence the calculation of the conveying speed, and an error of the position detection may influence the detection accuracy of the conveying speed, and thus there is room for improvement.

An object of the invention is to provide a conveying device and a conveying method capable of detecting a speed of a conveyed object with accuracy higher than that in the related art.

### Solution to Problem

The invention includes a plurality of aspects for solving the above problems, and an example thereof includes a conveying device including: an electromagnet including a core and a winding; a detection unit configured to detect a current flowing through the winding of the electromagnet; a drive unit configured to supply a voltage to the electromagnet; and a control unit. The control unit estimates a conveying speed of a conveyance container provided with a magnetic body based on the current flowing through one winding due to an influence of electromagnetic induction.

### Advantageous Effects of Invention

According to the invention, a speed of a conveyed object can be detected more accurately as compared with the related art. Problems, configurations, and effects other than those described above will become apparent in the following description of embodiments.

### Brief Description of Drawings

[FIG. 1] FIG. 1 is a plan view showing an overall configuration of a specimen analysis system including a conveying device according to a first embodiment.
[FIG. 2] FIG. 2 is a top view showing an example of a configuration of the conveying device according to the first embodiment.
[FIG. 3] FIG. 3 is a diagram schematically showing a difference in inductance between a waveform of an applied voltage and a corresponding current waveform in the conveying device according to the first embodiment.
[FIG. 4] FIG. 4 is a diagram showing a relation between a current flowing through a coil detected by a current detection unit and a distance between a holder and the coil in the conveying device according to the first embodiment.
[FIG. 5] FIG. 5 is a diagram showing a relation between a speed of a conveyed object and a minimum value of a current flowing through the coil at the conveying speed in the conveying device according to the first embodiment.
[FIG. 6] FIG. 6 is a waveform diagram showing an example of a relation among a waveform of a current flowing through the coil when a pulse voltage is applied, an envelope curve waveform of the current, and a distance between the coil and the holder in the conveying device according to the first embodiment.
[FIG. 7] FIG. 7 is a waveform diagram showing an example of a relation among the waveform of the current flowing through the coil when the pulse voltage is applied, a waveform of an envelope curve of the current, and a distance between the coil and the holder in the conveying device according to the first embodiment.
[FIG. 8] FIG. 8 is a flowchart showing a flow of a process of estimating the speed of the conveyed object in the conveying device according to the first embodiment.
[FIG. 9] FIG. 9 is a diagram showing a relation between a differential waveform of a current flowing through the coil detected by the current detection unit and a distance between the holder and the coil in a conveying device according to a second embodiment.

### Description of Embodiments

Hereinafter, embodiments of a conveying device and a conveying method of the invention will be described with reference to the drawings. In the drawings used in the specification, the same or corresponding components are denoted by the same or similar reference numerals, and repeated descriptions of the components may be omitted.

In the following embodiments, it is needless to mention that components (also including element steps and the like) thereof are not necessarily essential unless otherwise specified or unless clearly considered to be essential in principle.

### <First Embodiment>

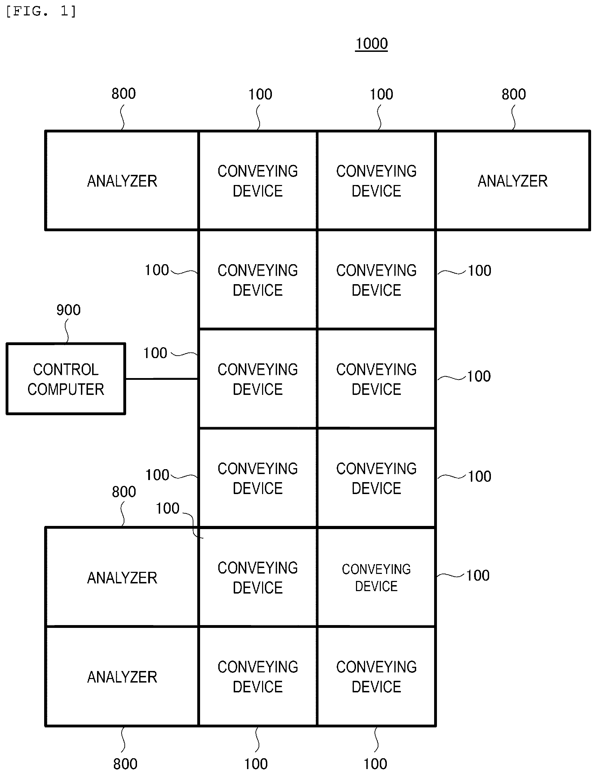

A conveying device and a conveying method according to a first embodiment of the invention will be described with reference to FIGS. 1 to 8.

First, an overall configuration of an entire specimen analysis system including a conveying device will be described with reference to FIG. 1. FIG. 1 is a plan view showing the overall configuration of the specimen analysis system including the conveying device according to the present embodiment.

A specimen analysis system 1000 according to the present embodiment shown in FIG. 1 is a system including an analyzer for automatically analyzing components in a specimen such as blood and urine.

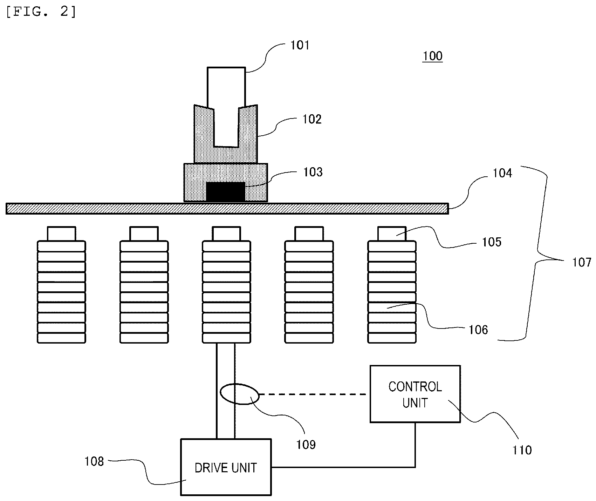

Main components of the specimen analysis system 1000 are a plurality of (twelve in FIG. 1) conveying devices 100 that convey a holder 102 (see FIG. 2) on which a specimen container 101 (see FIG. 2 and the like) accommodating a specimen is mounted or the empty holder 102 on which no specimen container 101 is mounted to a predetermined destination, a plurality of (four in FIG. 1) analyzers 800, and a control computer 900 that integrally manages the specimen analysis system 1000.

The analyzer 800 is a unit that performs qualitative and quantitative analysis on components in the specimen conveyed by the conveying device 100. Analysis items in the unit are not particularly limited, and a configuration of a known automatic analyzer for analyzing biochemical items and immune items can be adopted. Further, when a plurality of analyzers are provided, the specifications may be the same as or different from each other, and are not particularly limited.

Each of the conveying devices 100 is a device that conveys the specimen container 101 accommodating a specimen and mounted on the holder 102 to a destination (the analyzer 800, a take-out port, or the like) by sliding on a conveyance path by interaction between a coil 107 (see FIG. 2) and a magnetic body 103 (see FIG. 2) provided in the holder 102. Details thereof will be described with reference to FIG. 2 and subsequent drawings.

The control computer 900 controls operations of the entire system including the conveying device 100 and the analyzer 800, and is implemented by a computer including a display device and an input device such as a liquid crystal display, a storage device, a CPU, a memory, and the like. Control of an operation of each device is executed by the control computer 900 based on various programs recorded in the storage device.

Control processing of operations to be executed by the control computer 900 may be integrated into one program, or may be divided into a plurality of programs, or a combination thereof may be used. A part or all of the programs may be implemented by dedicated hardware or may be modularized.

In FIG. 1, the case where four analyzers 800 are provided is illustrated, and the number of analyzers 800 is not particularly limited and may be one or more. Similarly, the number of conveying devices 100 is not particularly limited and may be one or more.

In addition, the specimen analysis system 1000 can be provided with various types of specimen pre-processing and post-processing units that execute pre-processing and post-processing on a specimen. A detailed configuration of the specimen pre-processing and post-processing unit is not particularly limited, and the configuration of a known pre-processing device can be adopted.

Next, a configuration of the conveying device 100 according to the present embodiment will be described with reference to FIG. 2 and subsequent drawings.

First, the conveying device according to the embodiment of the invention will be described with reference to FIG. 2. FIG. 2 is a configuration diagram of the conveying device according to the invention.

In FIG. 2, the specimen container 101 accommodating a specimen is provided in the holder 102. The magnetic body 103 is provided on a bottom surface of the holder 102.

The magnetic body 103 can be implemented by a permanent magnet, another magnet, a soft magnetic body, or the like. Although it is not necessary to provide the magnetic body 103 on a lower surface of the holder 102, it is desirable to provide the magnetic body 103 on the lower surface from the viewpoint of efficiently applying a conveying force in the conveying method of the invention.

The holder 102 moves in a manner of sliding on a conveying surface 104. Therefore, a plurality of coils 107 each including a columnar core 105 and a winding 106 wound around an outer periphery of the core 105 are disposed below the conveying surface 104.

A drive unit 108 is connected to the winding 106 constituting each coil 107, and a predetermined current can flow by applying a predetermined voltage to the coil 107 from the drive unit 108. At this time, the coil 107 is excited to act as an electromagnet, and attracts the magnetic body 103 provided on the lower surface of the holder 102 on the conveying surface 104. By repeating this procedure for all the coils 107 up to a target position, the specimen container 101 provided in the holder 102 can be conveyed to a destination point on the conveying surface 104.

Generally, when a voltage is applied to the coil 107 to cause a current to flow, a magnetic field is generated around the coil 107, and a magnitude of generated magnetic flux is proportional to a value of the flowing current. This proportional constant is referred to as inductance.

When the holder 102 is near the coil 107, magnetic flux (magnetic field) generated by the magnetic body 103 is generated in the core 105. Accordingly, the magnetic flux (magnetic field) generated by the magnetic body 103 and the magnetic flux (magnetic field) generated by the current flowing through the coil 107 are generated in the core 105. In particular, a magnitude of the magnetic flux generated in the core 105 changes depending on a relative position between the magnetic body 103 and the coil 107.

On the other hand, the core 105 is made of a magnetic body, and the magnetic flux passing through the core 105 has a property of being difficult to pass as the magnetic flux increases. This property is known as magnetic saturation. Therefore, in a magnetic circuit including a magnetic body such as the core 105, when the magnetic flux generated in the core 105 increases and the saturation of the core 105 occurs, the inductance decreases. That is, when the magnetic field from the magnetic body 103 becomes large and the magnetic saturation occurs in the core 105, permeability becomes small, and thus the current flowing through the winding 106 (coil 107) changes.

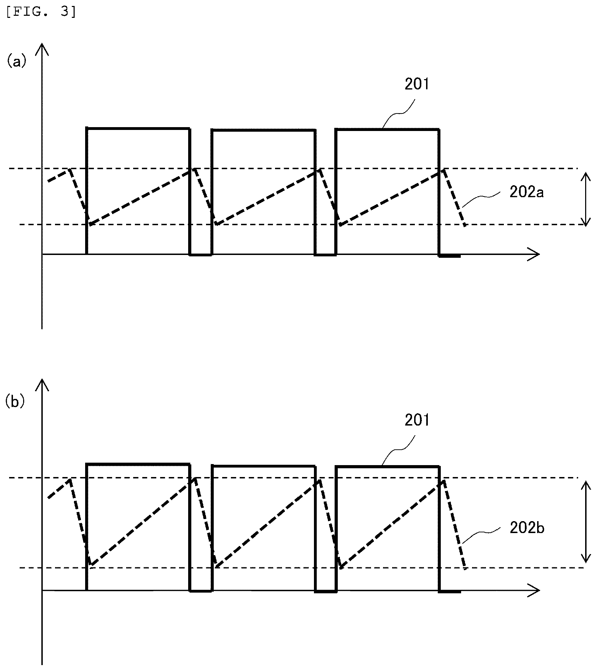

FIG. 3 is a waveform diagram for showing a waveform 201 of a voltage applied to the coil 107 by the conveying device and a waveform of a current corresponding to the voltage. (a) of FIG. 3 shows the waveform 201 of the voltage applied to the coil 107 and a waveform 202a of a current flowing through the coil 107 when the holder 102 is not present in the vicinity of the coil 107. (b) of FIG. 3 shows the waveform 201 of the voltage applied to the coil 107 and a waveform 202b of a current flowing through the coil 107 when the magnetic body 103 of the holder 102 approaches the coil 107 and the magnetic saturation occurs in the core 105.

That is, when the coil 107 is not influenced by the magnetic body 103 of the holder 102, a current amplitude is as shown in (a) of FIG. 3. On the other hand, when the magnetic body 103 of the holder 102 is present in the vicinity of the coil 107 and is influenced by the magnetic body 103, a current amplitude as shown in (b) of FIG. 3 is larger than that in (a) of FIG. 3.

The current flowing through the winding 106 of the coil 107 during the conveyance is detected by a current detection unit 109. The current flowing through the winding 106 of the coil 107 detected by the current detection unit 109 is digitized by a control unit 110.

When a voltage is applied to the coil 107, the control unit 110 according to the present embodiment executes a process of estimating a conveying speed of the holder 102 based on a value of a predetermined current flowing through the winding 106 of the coil 107 due to an influence of electromagnetic induction and detected by the current detection unit 109.

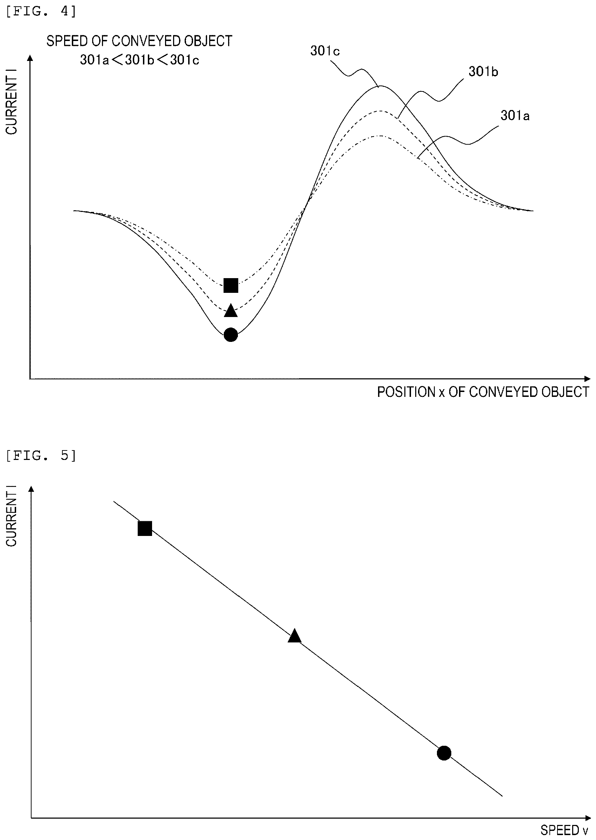

FIG. 4 is a graph showing a relation between a current flowing through the coil 107 and detected by the current detection unit 109 and a distance between the holder 102 and the coil 107 when the holder 102 including the magnetic body 103 passes over the coil 107 after a constant voltage is applied to the coil 107 and a steady state is reached.

As shown in FIG. 4, although a constant voltage is applied, the current flowing through the coil 107 pulsates. This is because an induced current is generated due to the influence of the electromagnetic induction when the holder 102 including the magnetic body 103 passes through the vicinity of the coil 107, and thus the pulsation occurs.

Since the influence of the electromagnetic induction increases as the conveying speed increases, the pulsation linearly increases as the speed of the conveyed holder 102 including the magnetic body 103 increases.

For example, when there are three types of speeds of the conveyed holder 102 including the magnetic body 103, that is, a low speed, an intermediate speed, and a high speed, as shown in FIG. 4, a magnitude of the pulsation satisfies a low-speed waveform 301a < an intermediate speed waveform 301b < a high-speed waveform 301c.

In the method of the related art disclosed in PTL 1, a position of the holder 102 including the magnetic body 103 is detected twice or more, and the conveying speed is estimated by dividing a moving distance by a time required for the detection. In the case of this method, there is a problem that the conveying speed largely depends on detection accuracy of the position.

Therefore, the invention utilizes a fact that the pulsation of the current flowing through the coil 107 linearly increases in proportion to the conveying speed.

FIG. 5 is a graph showing a relation between the speed of the conveyed object and the minimum value of the current flowing through the coil 107 at the corresponding conveying speed in the graph of FIG. 4. As shown in FIG. 5, the minimum value of the current flowing through the coil 107 is prepared in advance for each conveying speed, so that the conveying speed can be accurately estimated.

In order to create the graph of FIG. 5, it is not necessary to use the minimum value of the graph of FIG. 4, and it is also possible to create a graph that shows the same tendency by using the maximum value and estimate the conveying speed.

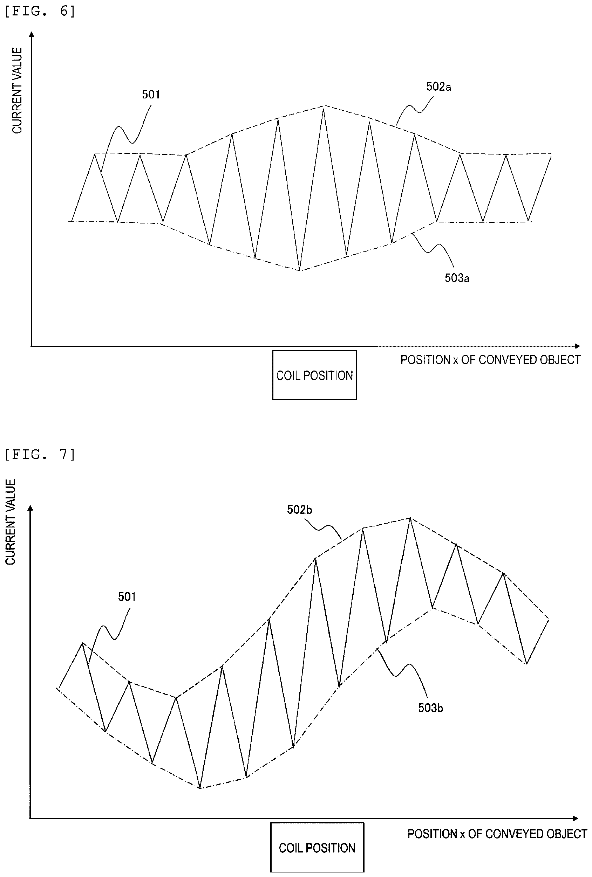

FIGS. 6 and 7 are waveform diagrams showing a relation among a waveform 501 of a current flowing through the coil 107 for conveying the holder 102 including the magnetic body 103 when a pulse voltage is applied to the coil 107, a waveform of an envelope curve of the current, and a distance between the coil 107 and the holder 102 including the magnetic body 103.

In a stationary state (a state in which there is no influence of the electromagnetic induction), as shown in FIG. 6, when the holder 102 is stopped and measurement is performed while the pulse voltage is applied to the coil 107, the flowing current increases as the holder 102 approaches a position directly above the coil 107 and takes a maximum value and a minimum value at the position directly above the coil 107. That is, an upper waveform 502a of a line (envelope curve) connecting the extreme values of the current flowing through the coil 107 increases toward a position immediately above the coil 107, and reaches a peak (takes the maximum value) immediately above the coil 107. Similarly, a lower waveform 503a of the envelope curve decreases toward the position immediately above the coil 107, and has a peak (takes the minimum value) immediately above the coil 107.

On the other hand, in a conveyance state in which the holder 102 moves (a state in which there is the influence of the electromagnetic induction), an absolute value of the maximum value of the waveform becomes larger and an absolute value of the minimum value becomes smaller due to the influence of the electromagnetic induction.

The position of the peak is also not directly above the coil 107, and transitions. Specifically, as shown in FIG. 7, due to the influence of the electromagnetic induction, both the upper waveform 502b and the lower waveform 503b take local minimum values before the holder 102 including the magnetic body 103 reaches the position directly above the coil 107, and take local maximum values after passing the position directly above the coil 107.

Therefore, in the present embodiment, a correspondence equation representing a degree of increase in the current of the coil 107 according to the speed of the holder 102 is prepared in advance for the corresponding coil 107 (FIGS. 4 and 5), and the control unit 110 can measure the value of the current flowing through the winding 106 when the pulse voltage is applied to the coil 107, create the envelope curve (the upper waveforms 502a and 502b or the lower waveforms 503a and 503b) of the current, and estimate the conveying speed based on the envelope curve. At this time, the control unit 110 preferably estimates the conveying speed based on the maximum value or the minimum value of the envelope curve, that is, the extreme values.

The lower waveform 503b of the envelope curve created based on the speed of the conveyed holder 102 including the magnetic body 103 and the current flowing through the coil 107 is a waveform having an outline similar to that of FIG. 4.

Generally, since the influence of the electromagnetic induction increases as the conveying speed increases, as the speed of the conveyed holder 102 including the magnetic body 103 increases, an amplitude of the lower waveform 503b of the envelope curve created based on the current flowing through the coil 107 also increases.

A propulsive force of the electromagnet (coil 107) is controlled by controlling the current flowing through the coil 107. When the constant voltage is continuously applied to the coil 107, the current flowing through the coil 107 is also constant, and thus the propulsive force of the coil 107 cannot be changed and becomes constant.

On the other hand, when the pulse voltage is applied and used, the current flowing through the coil 107 can be controlled by controlling a pulse width of the pulse voltage, a force of any magnitude can be generated in the holder 102, and the holder 102 can be conveyed at any speed.

Further, when the pulse voltage is applied, the position of the holder 102 including the magnetic body 103 can be estimated based on the waveform of the current flowing through the coil 107 without adding a new sensor.

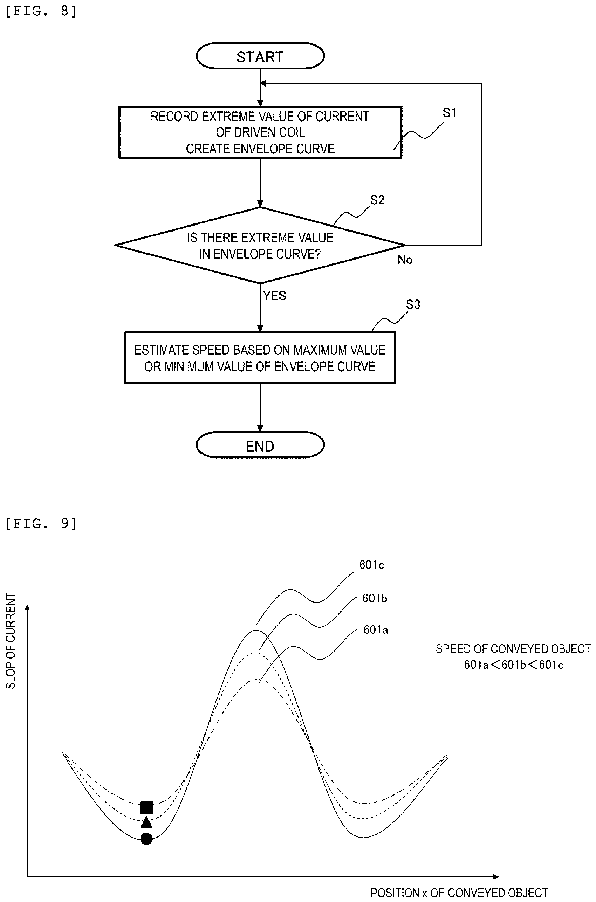

Next, a specimen conveying method according to the present embodiment, which is preferably executed by the conveying device 100 according to the first embodiment, will be described with reference to FIG. 8. FIG. 8 is a flowchart showing a flow of a process of estimating the speed of the conveyed object according to the present embodiment.

After a start of conveyance, as shown in FIG. 8, the control unit 110 according to the present embodiment outputs a command signal to the drive unit 108 to apply a constant voltage to the coil 107. At this time, a peak value of a waveform 301 of the current flowing through the coil 107 detected by the current detection unit 109 is recorded for each position of the holder 102 including the magnetic body 103, and the envelope curves as shown in FIGS. 6 and 7 are created in order to extract the influence of the electromagnetic induction from the current waveform 501 (step S1).

Next, the control unit 110 determines whether there is an extreme value in the envelope curve created in step S1 (step S2). When it is determined that there is an extreme value, the process proceeds to step S3. On the other hand, when it is determined that there is no extreme value, the process returns to step S1, and the process is repeated until the extreme value is detected.

Next, the control unit 110 estimates the conveying speed of the holder 102 including the magnetic body 103 based on the maximum value or the minimum value of the envelope curve determined to have the extreme value (step S3).

The control unit 110 continuously executes the above processes during activation of the conveying device 100 or until a conveyance stop instruction is input after a conveyance instruction is input.

Next, effects of the present embodiment will be described.

The conveying device 100 according to the first embodiment of the invention as described above includes the coil 107 including the core 105 and the winding 106, the current detection unit 109 configured to detect a current flowing through the winding 106 of the coil 107, the drive unit 108 configured to supply a voltage to the coil 107, and the control unit 110. The control unit 110 estimates the conveying speed of the holder 102 provided with the magnetic body 103 based on the current flowing through one winding 106 due to the influence of the electromagnetic induction.

As described above, since the current flowing through the coil due to the influence of the electromagnetic induction is utilized, the speed of the holder 102 can be estimated with accuracy higher than that in the related art.

Further, the control unit 110 creates an envelope curve of the current flowing through the winding 106 when the pulse voltage is applied to the coil 107, and estimates the conveying speed based on the envelope curve, so that the influence of the electromagnetic induction can be extracted with higher accuracy, and the speed of the holder 102 can be estimated with higher accuracy.

Further, the control unit 110 estimates the conveying speed based on the maximum value or the minimum value of the envelope curve, thereby implementing the speed estimation with higher accuracy.

### <Second Embodiment>

A conveying device and a conveying method according to a second embodiment of the invention will be described with reference to FIG. 9.

In the first embodiment described above, the control unit 110 uses the magnitude of the peak of the current waveform 301 influenced by the electromagnetic induction to estimate the speed of the holder 102. In this regard, in the second embodiment, the control unit 110 creates a differential waveform 601 of the current waveform 301 influenced by the electromagnetic induction, and estimates the speed using the differential waveform 601.

FIG. 9 is a waveform diagram showing the differential waveform 601 of the current waveform 301 influenced by the electromagnetic induction. Similarly to the current waveform 301 influenced by the electromagnetic induction, the magnitude of the peak of the differential waveform 601 of the current waveform 301 influenced by the electromagnetic induction satisfies a low-speed waveform 601a < an intermediate speed waveform 601b < a high-speed waveform 601c according to the speed.

Therefore, in the present embodiment, a correspondence equation representing a degree of increase in a differential of the current waveform of the coil 107 according to the speed of the holder 102 is prepared in advance for the corresponding coil 107 (relation similar to those shown in FIGS. 4 and 5), and the control unit 110 can measure the value of the current flowing through the winding 106 when the pulse voltage is applied to the coil 107, create the envelope curve (the upper waveforms 502a and 502b or the lower waveforms 503a and 503b) of the current, and estimate the conveying speed based on a slope of the envelope curve. At this time, the control unit 110 preferably estimates the conveying speed based on the maximum value or the minimum value of the slope of the envelope curve.

Other configurations and operations are substantially the same as those of the conveying device and the conveying method according to the first embodiment described above, and details thereof are omitted.

In the conveying device and the conveying method according to the second embodiment of the invention, substantially the same effects as those of the conveying device and the conveying method according to the first embodiment described above can also be obtained.

In addition, by estimating the conveying speed based on the maximum value or the minimum value of the slope of the envelope curve, the control unit 110 can estimate the speed of the holder 102 including the magnetic body 103 even at a position farther than an estimated position of the conveyed object in the first embodiment, although accuracy of the speed estimation is lower than that in the first embodiment using the current waveform 301 influenced by the electromagnetic induction due to a large variation.

### <Third Embodiment>

A conveying device and a conveying method according to a third embodiment of the invention will be described.

In the first embodiment, the magnitude of the peak of the current waveform 301 influenced by the electromagnetic induction was used to estimate the speed, and in the second embodiment, the magnitude of the peak of the differential waveform 601 of the current waveform 301 influenced by the electromagnetic induction was used to estimate the speed.

Features of the first embodiment include that the speed of the holder 102 including the magnetic body 103 can be accurately estimated, while features of the second embodiment include that the speed can be estimated at a position where the holder 102 including the magnetic body 103 is located farther than that in the first embodiment.

In the third embodiment, the speed of the holder 102 including the magnetic body 103 is estimated by combining these two.

The control unit 110 estimates the conveying speed using one of the maximum value or the minimum value of the envelope curve and the maximum value or the minimum value of the slope of the envelope curve.

That is, the speed of the holder 102 including the magnetic body 103 is estimated using the differential waveform 601 of the current waveform 301 influenced by the electromagnetic induction at a position where the differential waveform 601 of the current waveform 301 influenced by the electromagnetic induction reaches the peak, and the speed of the holder 102 including the magnetic body 103 is estimated using the current waveform 301 influenced by the electromagnetic induction at a position where the current waveform 301 influenced by the electromagnetic induction reaches the peak.

Here, the "current waveform" and the "differential waveform" are selectively used by detecting the holder 102 up to a distant range using the "differential waveform" in a normal state, and switching to the "current waveform" is performed to ensure accuracy when the holder 102 is detected once or when the holder 102 is detected and it is determined that the distance is smaller than a predetermined threshold. When the holder 102 is no longer detected or when the distance to the holder 102 becomes larger than the predetermined threshold, the "current waveform" is preferably switched to the "differential waveform" again.

Other configurations and operations are substantially the same as those of the conveying device and the conveying method according to the first embodiment described above, and details thereof are omitted.

In the conveying device and the conveying method according to the third embodiment of the invention, substantially the same effects as those of the conveying device and the conveying method according to the first embodiment described above can also be obtained.

In addition, by the control unit 110 estimating the conveying speed using any one of the maximum value or the minimum value of the envelope curve and the maximum value or the minimum value of the slope of the envelope curve, the number of times the speed of the holder 102 including the magnetic body 103 can be estimated is increased, and the number of times the control unit 110 can perform feedback of the speed control is increased, so that the conveyance can be performed more stably.

### <Fourth Embodiment>

A conveying device and a conveying method according to a fourth embodiment of the invention will be described.

In the conveying device 100, even when no voltage is applied to the coil 107, the current detection unit 109 detects an induced current generated due to the influence of the electromagnetic induction when the holder 102 including the magnetic body 103 is conveyed on the coil 107 on an assumption that the holder 102 includes the magnetic body 103.

As described above, the induced current generated due to the influence of the electromagnetic induction depends on the speed of the holder 102 including the magnetic body 103, and a waveform of the induced current flowing at that time has the same waveform as the current waveform 301 influenced by the electromagnetic induction shown in FIG. 9 according to the speed.

That is, even when no voltage is applied to the coil 107, the speed of the holder 102 including the magnetic body 103 can be estimated using the peak of the waveform of the current detected by the current detection unit 109 or the peak of the differential waveform of the waveform of the current detected by the current detection unit 109.

Therefore, in the present embodiment, the control unit 110 estimates the conveying speed based on the current flowing through the winding 106 of the coil 107 as the holder 102 is conveyed. Here, the control unit 110 can estimate the conveying speed based on the maximum value or the minimum value of the current flowing through the winding 106, or can estimate the conveying speed based on the maximum value or the minimum value of the slope of the current flowing through the winding 106.

The conveying device according to the present embodiment is not limited to electromagnetic conveyance as in the first to third embodiments, and is also suitable for a conveying device in which the coil 107 is provided as a speed sensor so that a magnetic pole is not used for driving the holder 102 in a belt manner, in a self-traveling manner, or the like.

Other configurations and operations are substantially the same as those of the conveying device and the conveying method according to the first embodiment described above, and details thereof are omitted.

In the conveying device and the conveying method according to the fourth embodiment of the invention, substantially the same effects as those of the conveying device and the conveying method according to the first embodiment described above can also be obtained.

### <Others>

The invention is not limited to the above-described embodiments, and includes various modifications. The above-described embodiments have been described in detail to facilitate understanding of the invention, and the invention is not necessarily limited to those including all the configurations described above.

A part of a configuration in one embodiment can be replaced with a configuration in another embodiment, and a configuration in one embodiment can also be added to a configuration in another embodiment. A part of a configuration in each embodiment may also be added to, deleted from, or replaced with another configuration.

### Reference Signs List

100 conveying device
101 specimen container
102 holder (conveyance container)
103 magnetic body
104 conveying surface
105 core
106 winding
107 coil (electromagnet)
108 drive unit
109 current detection unit
110 control unit
201 waveform of voltage applied to coil
202a, 202b waveform of current flowing through coil changed depending on whether conveyed object is being conveyed
301 current waveform including influence of electromagnetic induction flowing through coil during conveyance
301a low-speed waveform
301b intermediate speed waveform
301c high-speed waveform
501 waveform of current flowing through coil during conveyance
502a, 502b upper waveform of envelope curve created based on current flowing through coil
503a, 503b lower waveform of envelope curve created based on current flowing through coil
601 differential waveform of waveform of envelope curve flowing through coil during conveyance
601a low-speed waveform
601b intermediate speed waveform
601c high-speed waveform
800 analyzer
900 control computer
1000 specimen analysis system

## Claims

1. A conveying device comprising:
an electromagnet including a core and a winding;
a detection unit configured to detect a current flowing through the winding of the electromagnet;
a drive unit configured to supply a voltage to the electromagnet; and
a control unit, wherein
the control unit estimates a conveying speed of a conveyance container provided with a magnetic body based on the current flowing through one winding due to an influence of electromagnetic induction.

2. The conveying device according to claim 1, wherein
the control unit creates an envelope curve of a current flowing through the winding when a pulse voltage is applied to the electromagnet, and estimates the conveying speed based on the envelope curve.

3. The conveying device according to claim 2, wherein
the control unit estimates the conveying speed based on a maximum value or a minimum value of the envelope curve.

4. The conveying device according to claim 2, wherein
the control unit estimates the conveying speed based on a maximum value or a minimum value of a slope of the envelope curve.

5. The conveying device according to claim 2, wherein
the control unit estimates the conveying speed using one of a maximum value or a minimum value of the envelope curve, and a maximum value or a minimum value of a slope of the envelope curve.

6. The conveying device according to claim 1, wherein
the control unit estimates the conveying speed based on a current flowing through the winding when a voltage is applied to the electromagnet.

7. The conveying device according to claim 1, wherein
the control unit estimates the conveying speed based on a current flowing through the winding of the electromagnet when the conveyance container is conveyed.

8. The conveying device according to claim 7, wherein
the control unit estimates the conveying speed based on a maximum value or a minimum value of a current flowing through the winding.

9. The conveying device according to claim 7, wherein
the control unit estimates the conveying speed based on a maximum value or a minimum value of a slope of a current flowing through the winding.

10. A conveying method of a conveyance container having a magnetic body, comprising:
estimating a conveyance speed of the conveyance container based on a current flowing through a winding of an electromagnet including one core and the winding due to an influence of electromagnetic induction.

11. The conveying method according to claim 10 further comprising:
creating an envelope curve of a current flowing through the winding when a pulse voltage is applied to the electromagnet, and estimating the conveying speed based on the envelope curve.

12. The conveying method according to claim 11 further comprising:
estimating the conveying speed based on a maximum value or a minimum value of the envelope curve.

13. The conveying method according to claim 11 further comprising:
estimating the conveying speed based on a maximum value or a minimum value of a slope of the envelope curve.
